# EUROPÄISCHE PATENTSCHRIFT

(11) **EP 4 624 779 B1**
(45) Veröffentlichungstag und Bekanntmachung des Hinweises auf die Patenterteilung: **29.07.2026**
(21) Anmeldenummer: 24165928.3
(22) Anmeldetag: 25.03.2024
(51) Int. Cl.: F16G 3/10, F16G 3/02

(54) **RIEMEN ALS ENDLOSES ZUGMITTEL FÜR FÖRDERBÄNDER**
BELT AS ENDLESS TRACTION MEANS FOR CONVEYOR BELTS
COURROIE COMME MOYEN DE TRACTION SANS FIN POUR BANDES TRANSPORTEUSES

(43) Veröffentlichungstag der Anmeldung: 01.10.2025
(73) Patentinhaber: Arnold Jäger Holding GmbH, 30559 Hannover (DE)
(72) Erfinder: JÄGER, Sebastian, 30657 Hannover (DE)
(74) Vertreter: Lüdtke, Thomas

(56) Entgegenhaltungen:
- EP-A2- 2 801 268
- WO-A2-00/05449
- DE-A1- 102011 116 633

## Beschreibung

Die Erfindung betrifft einen Riemen als endloses Zugmittel für Förderbänder gemäß dem Oberbegriff des Anspruches 1, insbesondere für Förderbänder landwirtschaftlicher Maschinen.

Ein derartiger Riemen ist beispielsweise in der DE 10 2016 112 301 A1 oder DE 10 2004 023 705 B3 offenbart, die jeweils eine Maschine zum Aufnehmen und Pressen von landwirtschaftlichem Erntegut, z. B. Heu oder Stroh betreffen. Diese Maschine ist mit einem Ballenförderer ausgestattet, der zwei parallel zueinander beabstandeten Riemen aufweist, die durch voneinander parallel beabstandete Querstäbe miteinander verbunden sind. Die Riemen bestehen aus einem Kunststoffmaterial oder aus Gummi und sind durch mindestens eine Gewebelage verstärkt.

Die Riemen müssen für ihren Einsatz in endloser Form vorliegen. Zur Herstellung einer derartigen endlosen Form sind aus dem Stand der Technik verschiedene Vorgehensweisen bekannt:
So ist es aus DE 100 37 645 A1 bekannt, die beiden Riemenenden des Riemens kammerartig zu verzahnen und die Verzahnungsbereiche zum Endlosmachen des Riemens ineinanderzuschieben und nach zu vulkanisieren. Gemäß DE 38 08 711 A1 ist vorgesehen, dass an den beiden Riemenenden metallische Armaturen befestigt sind, die im Wesentlichen u-förmig gestaltet und wechselseitig an den Riemenenden angeordnet sind. Die Schenkel der Armaturen schließen die Riemenende mit Pressung zwischen sich ein und sind durch Niete, die die Riemenenden durchsetzen befestigt. Die die Schenkel verbindenden etwa halbkreisförmigen Stege der Armaturen liegen wechselseitig an einem Stab an, der sich über die gesamte Breite der Riemenenden erstreckt und nach der Montage des Bandes eingeführt ist und zum Zwecke der Demontage des Bandes herausgezogen werden muss. Der Stab besteht aus einem geeigneten Metall, er kann aber auch als starkes Drahtseil ausgebildet sein. Eine ähnliche Lösung zum Verbinden der Riemenenden ist in DE 39 03 921 A1 gezeigt. Nachteilig hierbei ist, dass sich die Armaturen im Bereich der halbreisförmigen Stege durch Reibung mit dem Stab im Betrieb des Riemens mit der Zeit abnutzen und der Riemen daher getauscht werden muss.

Eine weitere Riemenverbindung mit einem Stab ist in DE 32 46 530 A1 beschrieben, wobei der Stab oder Bolzen in eine Querbohrung eingesteckt ist, um die die Enden von einvulkanisierten Verstärkungseinlagen des Riemens umgelegt sind. Jedes Riemenende weist eine solche Querbohrung auf, so dass der Stab durch die Querbohrungen der beiden scharnierartig ineinandergesteckten Riemenenden geführt werden kann und die beiden Riemenenden dadurch zusammenhält.

In der EP 3 078 880 A1 oder EP 3 345 474 A1 erfolgt das Endlosmachen eines als Nockenriemen ausgeführten Zugmittels durch ein Riemenschloss als Riemenverbinder. Derartige Riemenschlösser werden in verschiedenen Ausführungsformen häufig zum Endlosmachen von Zugmitteln für Förderbänder von landwirtschaftlichen Maschinen eingesetzt.

In der DE 10 2011 116 633 A1 ist weiterhin ein aus einem gewebelagenverstärkten Polymer hergestellter Flachriemen als Zugmittel bekannt. Das Endlosmachen dieses Riemens erfolgt dadurch, dass er an beiden Enden über die gesamte Breite mehrfach abgestuft ist. Dadurch ergibt sich ein Überlappungsbereich, in dem ein erster Endbereich des Riemens und ein zweiter Endbereich des Riemens überlappend aufeinander liegen. Der Riemen besitzt auf seiner Unterseite in gleichmäßigen Abständen angeordnete, sich quer zur Längsrichtung erstreckenden Nuten, die im Überlappungsbereich der Aufnahme von Ankerplatten dienen. Jede Ankerplatte weist zwei angeschweißte und voneinander beabstandete Schraubenbolzen auf. Bei aufeinandergelegten Riemenenden durchragen diese Schraubenbolzen in den Riemenenden vorgesehene, miteinander fluchtende Löcher. Auf die aus dem Riemen herausragenden Enden der Schraubenbolzen werden Muttern aufgedreht und fest angezogen, wodurch die Riemenenden zur Übertragung von Zugkräften fest aneinandergepresst werden.

Nachteilig bei diesen Riemenverbindungen ist, dass sie aufwendig auszubilden sind und im Betrieb störende Geräusche dadurch verursachen können, dass metallische Bestandteile im Bereich der Riemenverbindung auf andere Bauteile, z.B. Zahnräder oder Rollen oder dgl., aufschlagen. Ferner ist problematisch, die Riemenverbindung in geeigneter Weise an den Riemenenden zu befestigen und/oder diese bei einem Defekt auszutauschen.

**In** EP 3 667 118 A1 ist weiterhin beschrieben, die Riemenenden des Riemens direkt durch ein oder mehrere Nähte miteinander zu verbinden.

**In** EP 2 801 268 A2 ist vorgesehen, die Enden eines Fördergurtes für eine Tabakverteilvorrichtung über ein Schloss miteinander zu verbinden.

Aufgabe der vorliegenden Erfindung ist, einen Riemen zur Verfügung zu stellen, der einfach und flexibel herzustellen und zu reparieren ist und gleichzeitig sehr robust bzw. dauerhaltbar ausgeführt ist und daher lange Betriebszeiten gewährleistet.

Diese Aufgabe wird durch einen Riemen gemäß Anspruch 1 gelöst. Die Unteransprüche geben dabei bevorzugte Weiterbildungen an.

Erfindungsgemäß ist demnach ein Riemen als endloses Zugmittel für Förderbänder, insbesondere Förderbänder landwirtschaftlicher Maschinen, vorgesehen, wobei der Riemen ein erstes Riemenende und ein zweites Riemenende aufweist, die über einen Riemenverbinder als zusätzliches Bauteil miteinander verbunden sind, wobei zwischen dem jeweiligen äußeren Ende des Riemenverbinders und dem jeweiligen Riemenende des Riemens jeweils eine Nahtverbindung ausgebildet ist, bei der jeweils ein Faden sowohl das jeweilige äußere Ende als auch das jeweilige Riemenende in mehreren Stichen durchstößt. Es wird also ein Zwischenstück zwischen die Riemenenden genäht, um diese endlos zusammenzufügen, wobei das Zwischenstück flexibel an die jeweilige Anwendung und die Anforderungen angepasst werden kann.

Dadurch wird bereits der Vorteil erreicht, dass der Riemenverbinder in einfacher Weise durch das Ausbilden einer Naht an die Riemenenden dauerhaft angefügt werden kann, sowie bei einem Defekt des Riemenverbinders auch einfach wieder ausgetauscht werden kann, indem beispielsweise die Naht wieder gelöst wird und ein neuer Riemenverbinder zwischen die Riemenenden genäht wird. Alternativ kann auch vorgesehen sein, die Riemenenden kurz vor den Nahtstellen mit dem noch angenähten Riemenverbinder zu durchtrennen, die durchtrennten Riemenenden entsprechend neu zu preparieren (je nach Ausführungsform) und einen neuen Riemenverbinder (je nach Ausführungsform) bereitzustellen und anzunähen, der dann geringfügig länger ist, um die Verkürzung des Riemens zu kompensieren. Es wird also eine flexible und einfache Reparatur ermöglicht.

Die Verbindung über die Naht erfolgt dabei vorzugsweise durch eine Aufnahme am jeweiligen Riemenende, beispielsweise in Form einer Kerbe oder einer Stufe, und einem entsprechend komplementär ausgebildeten Aufnahme-Gegenstück am Riemenverbinder, die beide übereinanderliegend von dem Faden durchstoßen werden, um die Nahtverbindung auszubilden. Durchstößt der Faden dabei auch mindestes eine Gewebelage sowohl am Riemenende als auch am Riemenverbinder, kann die Verbindung zusätzlich gefestigt werden, da der Faden unter Zugbelastung von dem Gewebe zusätzlich gehalten wird.

Eine solche Ausbildung des Riemenverbinders kann dabei bei Flachriemen oder Nockenriemen zum Einsatz kommen, wobei bei einem Nockenriemen auch an dem Riemenverbinder unterseitig und/oder oberseitig Nocken angeordnet sind, wobei eine Teilung der Nocken des Riemens über den Riemenverbinder beibehalten ist.

Der Riemenverbinder kann dabei einteilig gefertigt sein oder mehrteilig, wobei der Riemenverbinder in der mehrteiligen Ausführung ein erstes Verbinderteil mit dem ersten äußeren Ende und mit einem ersten inneren Ende sowie ein zweites Verbinderteil mit dem zweiten äußeren Ende und mit einem zweiten inneren Ende aufweist, wobei zwischen den inneren Enden der beiden Verbinderteile eine mechanische Schlossverbindung ausgebildet ist, um einen endlosen Riemen auszubilden.

Gemäß einer Ausführungsform ist dabei an den inneren Enden der Verbinderteile jeweils ein Stahlblech mit ein oder mehreren Verbindungslöchern, die das jeweilige Stahlblech in vertikaler Richtung durchsetzen, angeordnet ist, wobei das jeweilige Stahlbleich zumindest teilweise in die Polymerschicht des Riemenverbinders eingebettet ist, wobei die inneren Enden der beiden Verbinderteile derartig übereinandergelegt sind, dass die Verbindungslöcher der daran angeordneten Stahlbleche fluchtend übereinanderliegen, und wobei mindestens ein Befestigungsmittel, beispielsweise ein Niet oder eine Schraube, durch die miteinander fluchtenden Verbindungslöcher gesteckt ist, um die Schlossverbindung auszubilden. Dies stellt eine einfach auszubildende und herzustellende Riemenverbindung dar, wobei die Stahlbleche dazu vorzugsweise an das jeweilige Verbinderteil angenäht sind, wobei das jeweilige Stahlblech dazu vorzugsweise eine Perforierung aufweist, um den Durchtritt der Nadel durch das Stahlblech beim Ausbilden der Nähverbindung zu erleichtern.

Gemäß einer weiteren Ausführung ist an den inneren Enden der Verbinderteile des Riemenverbinders jeweils mindestens eine in lateraler Richtung ausgedehnte Buchse angeordnet, beispielsweise eine zylindrische Buchse oder eine tropfenförmige Buchse, wobei die jeweilige Buchse in die Polymerschicht des Riemenverbinders eingebettet ist, wobei die inneren Enden der beiden Verbinderteile derartig ineinander eingreifen, beispielsweise fingerartig ineinander eingreifen, dass die Buchsen an den beiden Verbinderteilen miteinander fluchten, wobei in die miteinander fluchtenden Buchsen in lateraler Richtung ein Verbindungsstab passgenau eingesteckt ist, um die Schlossverbindung auszubilden. Auf diese Weise kann ergänzend eine gelenkige Schlossverbindung ausgebildet werden, wobei aufgrund der Einbettung der Buchsen in die Polymerschicht eine Geräuschentwicklung vermieden wird.

Um dabei die Positionierung der Buchsen in der Polymerschicht unter Zugbelastung zu sichern, umschlingt die mindestens eine Gewebelage des jeweiligen Verbinderteils die eingebettete Buchse, wobei dazu ein Endbereich der Gewebelage innerhalb der Polymerschicht auf einen Mittelbereich der Gewebelage zurückgeschlagen ist, wobei der Mittelbereich und der Endbereich der Gewebelage miteinander vernäht sind. Es kann also auch hier eine Nahtverbindung vorgesehen sein, um die Buchse zu sichern und die Zugfestigkeit des endlosen Riemens zu verbessern.

Ergänzend können die Buchsen eine ungleichmäßige Wandstärke aufweisen, beispielsweise indem eine erste Wandstärke der Buchse im Bereich einer Kontaktfläche der Zugkraftübertragung, gegen die der Verbindungsstab unter einer Zugbelastung gezogen wird, dicker ist als eine zweite Wandstärke der Buchse, die die Buchse auf der gegenüberliegenden Seite aufweist, wobei dies insbesondere bei einer zylindrischen Ausführung der jeweiligen Buchse von Vorteil ist.

Gemäß einer weiteren Ausführung kann an den inneren Enden der Verbinderteile des Riemenverbinders jeweils mindestens ein in lateraler Richtung ausgedehnter Rundstab angeordnet sein, wobei der jeweilige Rundstab innerhalb von Stegen an den inneren Enden in die Polymerschicht des Riemenverbinders eingebettet ist und in lateraler Richtung zwischen den Stegen eine Ausnehmung verläuft, innerhalb derer der jeweilige Rundstab freiliegt, wobei die inneren Enden der beiden Verbinderteile im Bereich der Stege aneinander liegen, insbesondere stirnseitig aneinander liegen, und mindestens ein Fixierbauteil die in den Ausnehmungen freiliegenden Rundstäbe an den beiden Verbinderteilen umgreift, um diese in Längsrichtung zusammenzuhalten und die Schlossverbindung auszubilden. Auch dadurch kann eine gelenkige Verbindung ausgebildet werden.

Auch bei dieser Ausführung kann die Positionierung der Rundstäbe in der Polymerschicht unter Zugbelastung dadurch gesichert werden, dass die mindestens eine Gewebelage des jeweiligen Verbinderteils den eingebetteten Rundstab umschlingt, wobei dazu ein Endbereich der Gewebelage innerhalb der Polymerschicht auf einen Mittelbereich der Gewebelage zurückgeschlagen ist, wobei der Mittelbereich und der Endbereich der Gewebelage miteinander vernäht sind.

Das Fixierbauteil kann dabei beispielsweise zwei C-förmige Endbereiche jeweils mit einem oberen Schenkel und einem unteren Schenkel aufweisen, wobei die beiden C-förmigen Endbereiche spiegelsymmetrisch zueinander geöffnet sind und jeweils eine Kavität zwischen den Schenkeln ausbilden, wobei die beiden in den Ausnehmungen freiliegenden Rundstäbe jeweils in einer der Kavitäten positioniert werden können, um die beiden Rundstäbe und dabei auch die beiden Verbinderteile zusammenzuhalten.

Alternativ kann dies auch dadurch erreicht werden, dass das Fixierbauteil band- oder seilartig ausgeführt ist und um die beiden in den Ausnehmungen freiliegenden Rundstäbe umgelegt ist, wobei das band- oder seilartige ausgeführte Fixierbauteil an einer Verbindungsstelle kraftschlüssig und/oder formschlüssig verschlossen ist, beispielsweise nach Art eines Kabelbinders, um es in eine geschlossene Form zu bringen und die Rundstäbe in Längsrichtung zusammenzuhalten.

Die Erfindung wird nachstehend anhand von Ausführungsbeispielen näher erläutert. Es zeigen:
- Fig. 1: ein auf einer Antriebsrolle und Umlenkrolle umlaufender Riemen mit einem Riemenverbinder;
- Fig. 1A: eine Ausführungsvariante des Riemenverbinders gemäß Fig. 1;
- Fig. 2A, 2B: eine Nahtverbindung zwischen den Riemenenden des Riemens gemäß Fig. 1 und dem Riemenverbinder in unterschiedlichen Ansichten;
- Fig. 3, 4: unterschiedliche Ausführungsformen eines einteiligen Riemenverbinders für einen Flachriemen bzw. einen Nockenriemen;
- Fig. 5A, 5B: ein zweiteiliger Riemenverbinder in einer ersten Ausführungsform;
- Fig. 6A-6E: ein zweiteiliger Riemenverbinder in einer zweiten Ausführungsform;
- Fig. 7A-7D: ein zweiteiliger Riemenverbinder in einer dritten Ausführungsform;
- Fig. 8A-8D: ein zweiteiliger Riemenverbinder in einer vierten Ausführungsform.

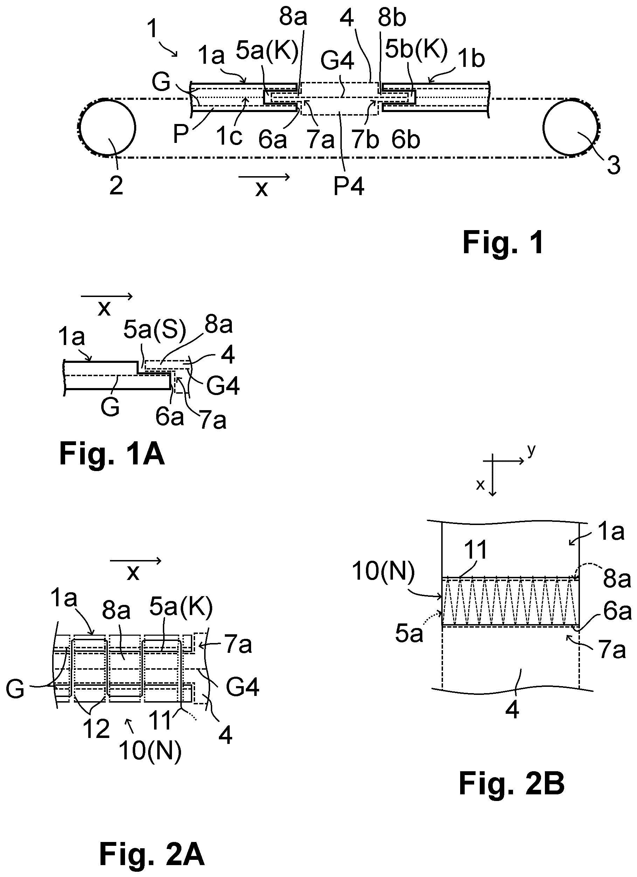

In Figur 1 ist schematisch ein endloser Riemen 1 dargestellt, wie er beispielsweise für ein Transportband oder Förderband landwirtschaftlicher Maschinen zum Einsatz kommt. Der Riemen 1 läuft dabei auf einer Antriebsrolle 2 und je nach Anwendung auf mindestens einer Umlenkrolle 3 um. Der Riemen 1 kann je nach Anwendung als ein Flachriemen mit flacher Oberfläche oder als ein Nockenriemen mit mehreren Nocken ausgeführt sein. In jeglichen Ausführungsformen besteht der Riemen 1 aus mindestens einer Gewebelage G, vorzugsweise mindestens zwei Gewebelagen G, die in eine Polymerschicht P eingebettet ist bzw. sind, wobei die Gewebelage G der umlaufenden Verstärkung des Riemens 1 dient.

Um einen solchen Riemen 1 derartig auszuführen, dass dieser endlos umlaufend auf der Antriebsrolle 2 und der mindestens einen Umlenkrolle 3 umlaufen kann, ist ein Riemenverbinder 4 vorgesehen, der in Fig. 1 lediglich schematisch angedeutet ist. Nachfolgend werden unterschiedliche Ausführungsformen dieses Riemenverbinders 4 näher erläutert, wobei alle Ausführungsformen gemeinsam haben, dass der Riemenverbinder 4 beidseitig an ersten und zweiten (offenen) Riemenenden 1a, 1b des Riemens 1 angenäht ist.

Dazu ist an den (ersten und zweiten) Riemenenden 1a, 1b jeweils eine (erste bzw. zweite) Aufnahme 5a, 5b, z.B. in Form einer Kerbe K (s. Fig. 1) oder einer Stufe S (s. Fig. 1A) vorgesehen, die sich von einer Stirnseite 6a, 6b des jeweiligen Riemenendes 1a, 1b ausgehend in Längsrichtung x oder in Laufrichtung des Riemens 1 erstreckt, beispielsweise über eine Länge von zwischen 15mm und 150mm. Falls der Riemen 1 zwei Gewebelagen G aufweist, verläuft die jeweilige Aufnahme 5a, 5b vorzugsweise zwischen den beiden Gewebelagen G in etwa in einer neutralen Faser 1c des Riemens 1, wie in Fig. 1 für die Kerbe K dargestellt. Ist hingegen nur eine Gewebelage G vorgesehen, verläuft die jeweilige Aufnahme 5a, 5b entsprechend oberhalb oder unterhalb der Gewebelage G, d.h. oberhalb oder unterhalb der neutralen Faser 1c des Riemens 1, wie in Fig. 1A für die Stufe S dargestellt. Es befindet sich also mindestes eine Gewebelage G oberhalb und/oder unterhalb der Aufnahme 5a, 5b.

An (ersten und zweiten) äußeren Enden 7a, 7b des Riemenverbinders 4 ist wiederum jeweils ein (erstes bzw. zweites) Aufnahme-Gegenstück 8a, 8b angeordnet, das komplementär zur jeweiligen Aufnahme 5a, 5b ausgeführt ist, beispielsweise in Form eines Steges oder ebenfalls einer Stufe, wie abgebildet. Vorzugsweise erstreckt sich innerhalb des Riemenverbinders 4 ebenfalls mindestens eine Gewebelage G4 bis in das jeweilige Aufnahme-Gegenstück 8a, 8b hinein. Werden die äußeren Enden 7a, 7b des Riemenverbinders 4 gegen die Stirnseiten 6a, 6b des jeweiligen Riemenendes 1a, 1b gebracht, kann das jeweilige Aufnahme-Gegenstück 8a, 8b passgenau in einer der Aufnahmen 5a, 5b positioniert werden.

Ist das Aufnahme-Gegenstück 8a, 8b am jeweiligen äußeren Ende 7a, 7b in der Aufnahme 5a, 5b am jeweiligen Riemenende 1a, 1b positioniert, wird in einem festgelegten Nahtbereich 10 eine Nahtverbindung N ausgebildet, wie in den Fig. 2A, 2B im Detail dargestellt. Dazu durchstößt ein Faden 11 gemäß einer ausgewählten Nahtform in mehreren Stichen 12 sowohl das jeweilige Riemenende 1a, 1b im Bereich der Aufnahme 5a, 5b als auch das in der Aufnahme 5a, 5b positionierte Aufnahme-Gegenstück 8a, 8b am jeweiligen äußeren Ende 7a, 7b des Riemenverbinders 4.

Durch diese Nahtverbindung N kann der Riemenverbinder 4 über das Aufnahme-Gegenstück 8a, 8b am jeweiligen Riemenende 1a, 1b fixiert werden. Da die jeweiligen Gewebelagen G, G4 sowohl am jeweiligen Riemenende 1a, 1b bis unterhalb und/oder oberhalb der Aufnahme 5a, 5b als auch am Riemenverbinder 4 bis in das Aufnahme-Gegenstück 8a, 8b verlaufen, durchstößt der Faden 11 auch diese übereinanderliegenden Gewebelagen G, G4 in den mehreren Stichen 12, so dass eine hochfeste und dauerbeständige Nahtverbindung N ausgebildet wird, über die insbesondere im endlosen Zustand des Riemens 1 auch hohe Zugkräfte übertragen werden können.

Der Vorteil einer solchen Nahtverbindung N zwischen dem Riemenverbinder 4 und den Riemenenden 1a, 1b ist, dass diese bei einem Defekt des Riemenverbinders 4 beispielsweise durch Lösen des Fadens 11 wieder aufgetrennt werden kann. Anschließend kann die Nahtverbindung N in einem erneuten Nähvorgang mit einem ausgetauschten oder reparierten Riemenverbinder 4 wiederhergestellt werden. Die Stiche S zerstören das jeweilige Riemenende 1a, 1b dabei nicht in dem Maße, dass eine erneute endlose Verbindung nicht mehr möglich ist, was durch die eingebetteten Gewebelagen G, G4 unterstützt wird. Zudem kann die neue Nahtverbindung N entsprechend versetzt zu der aufgetrennten Nahtverbindung N ausgebildet werden, so dass auch nach einem erneuten Nähvorgang eine ausreichend hohe Zugfestigkeit über den Riemenverbinder 4 erreicht werden kann. Alternativ kann auch vorgesehen sein, die Riemenenden 1a, 1b beispielsweise kurz vor den Nahtstellen mit dem noch angenähten Riemenverbinder 4 zu durchtrennen, die durchtrennten Riemenenden 1a, 1b entsprechend der jeweiligen Ausführungsform neu zu preparieren und einen neuen Riemenverbinder 4 gemäß der jeweiligen Ausführungsform bereitzustellen und anzunähen, der dann geringfügig länger ist, um die Verkürzung des Riemens 1 zu kompensieren.

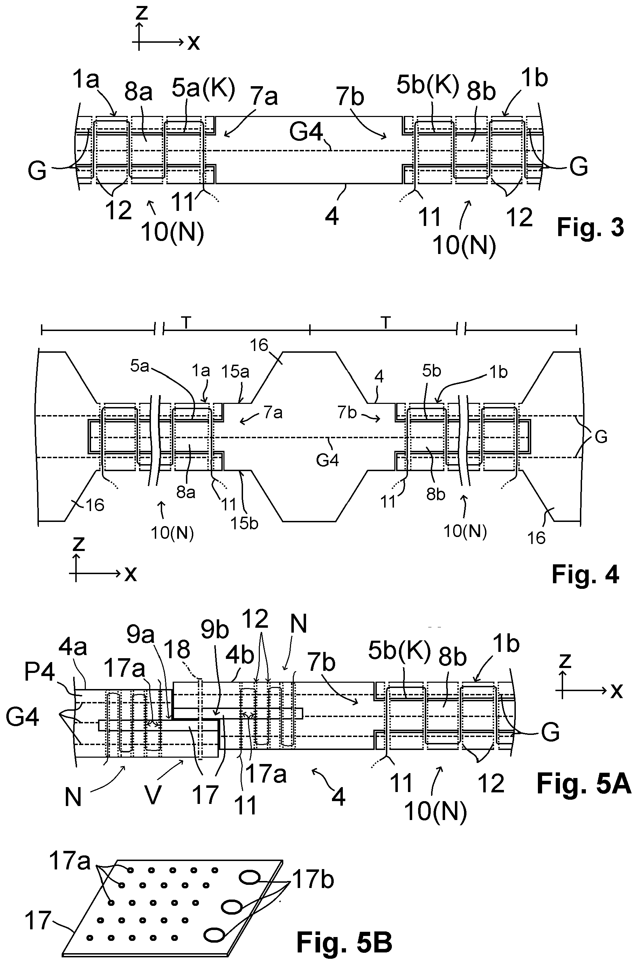

Der Riemenverbinder 4 selbst kann dabei einteilig gefertigt sein (vgl. Fig. 3 oder 4) oder aber aus einem ersten Verbinderteil 4a und einem zweiten Verbinderteil 4b bestehen (vgl. Fig. 5A, 5B, 6A-6E,7A-7D,8A-8D), wobei jedes Verbinderteil 4a, 4b eines der äußeren Enden 7a, 7b des Riemenschlosses 4 aufweist. Über das Aufnahme-Gegenstück 8a, 8b am jeweiligen äußeren Ende 7a, 7b kann also jedes Verbinderteil 4a, 4b einzeln mit dem jeweiligen Riemenende 1a, 1b verbunden werden. Jedes Verbinderteil 4a, 4b weist ferner innere Enden 9a, 9b auf, die den äußeren Enden 7a, 7b am jeweiligen Verbinderteil 4a, 4b (in Längsrichtung x) gegenüberliegen. Die inneren Enden 9a, 9b können mechanisch derartig über eine ausgewählte Schlossverbindung V miteinander verbunden werden, dass auch darüber im endlosen Zustand des Riemens 1 hohe Zugkräfte übertragen werden können. Nachfolgend werden unterschiedliche Ausführungsformen des Riemenverbinders 4 näher erläutert:
Gemäß der in Fig. 3 dargestellten Ausführungsform ist der Riemenverbinder 4 einteilig aus einer Polymerschicht P4 mit mindestes einer darin eingebetteten Gewebelage G4 zur Verstärkung gefertigt. Eine Dicke und eine Breite des Riemenverbinders 4 ist an eine Dicke und eine Breite des Riemens 1 angepasst, so dass der Riemenverbinder 4 in lateraler Richtung y und in vertikaler Richtung z nicht über die Riemenenden 1a, 1b hinausragt. An den beiden in Längsrichtung x gegenüberliegenden äußeren Enden 7a, 7b des Riemenverbinders 4 sind die oben beschriebenen Aufnahme-Gegenstücke 8a, 8b angeordnet, die jeweils in den Aufnahmen 5a, 5b am jeweiligen Riemenende 1a, 1b passgenau positioniert werden können. Nachfolgend kann die Nahtverbindung N ausgebildet werden, um den Riemen 1 über den dazwischen eingenähten Riemenverbinder 4 in eine endlose Form zu bringen.

Gemäß der Ausführungsform in Fig. 4 ist der Riemenverbinder 4 als ein Formteil 15 ausgebildet, das aus einer Polymerschicht P4 mit mindestens einer darin eingebetteten Gewebelage G4 besteht. Auf einer Oberseite 15a und einer Unterseite 15b des Formteils 15 ist jeweils ein Nocken 16 geformt, wobei die Nocken 16 vorzugsweise einteilig mit der Polymerschicht P4 gefertigt sind, so dass ein einteiliges Formteil 15 ausgebildet wird. Auch der Riemen 1 weist in dieser Ausführungsform oberseitig und unterseitig Nocken 16 auf, die als feste oder lose Nocken ausgeführt sind und die in Längsrichtung x in vorgegebener Teilung T voneinander beabstandet sind.

An den äußeren Enden 7a, 7b des als Formteil 15 ausgeführten Riemenverbinders 4 sind die oben beschriebenen Aufnahme-Gegenstücke 8a, 8b angeordnet, die jeweils in den Aufnahmen 5a, 5b am jeweiligen Riemenende 1a, 1b passgenau positioniert werden können. Nachfolgend kann die Nahtverbindung N ausgebildet werden, um den Riemen 1 über das dazwischen eingenähte Formteil 15 in eine endlose Form zu bringen. Das Formteil 15 ist dabei derartig bemessen und mit den Riemenenden 1a, 1b vernäht, dass die Teilung T zwischen den Nocken 16 auch über den Riemenverbinder 4 fortgeführt wird.

In der Ausführungsform gemäß Fig. 5A ist der Riemenverbinder 4 zweiteilig ausgebildet, wobei das erste und das zweite Verbinderteil 4a, 4b jeweils aus einer Polymerschicht P4 mit drei darin eingebetteten Gewebelagen G4 zur Verstärkung gefertigt sind. Ferner ist in jedes der Verbinderteile 4a, 4b ein Stahlblech 17, insbesondere Federstahlblech, zumindest teilweise in die Polymerschicht P4 eingebettet. Das Stahlblech 17 weist eine Perforierung 17a sowie mehrere Verbindungslöcher 17b auf, wie in Fig. 5B im Detail dargestellt.

Die inneren Enden 9a, 9b der beiden Verbinderteile 4a, 4b sind derartig gegensätzlich abgestuft, dass die Verbindungslöcher 17b des Stahlblechs 17 freiliegen während die Perforierung 17a des Stahlblechs 17 in der gewebelagenverstärkten Polymerschicht P4 eingebettet bleibt. Die Perforierung 17a dient dabei der Ausbildung einer Nahtverbindung N zwischen der gewebelagenverstärkten Polymerschicht P4 und dem Stahlblech 17. Dazu wird ein Faden 11 in mehreren Stichen 12 durch die gewebelagenverstärkte Polymerschicht P4 sowie durch die Perforierung 17a im Stahlblech 17 gestoßen, so dass das Stahlblech 17 bei Zugbelastungen auf den endlosen Riemen 1 sicher am jeweiligen inneren Ende 9a, 9b des jeweiligen Verbinderteils 4a, 4b gehalten wird.

Die gegensätzlich abgestuften inneren Enden 9a, 9b der beiden Verbinderteile 4a, 4b sind derartig aufeinandergelegt, dass sich die freiliegenden Bereiche der Stahlbleche 17 flächig berühren und die Verbindungslöcher 17b fluchtend übereinanderliegen. In die Verbindungslöcher 17b werden entsprechende Befestigungsmittel 18, beispielsweise Schrauben oder Niete, eingebracht, um als Schlossverbindung V eine Schraub- bzw. Nietverbindung auszubilden.

An den äußeren Enden 7a, 7b der beiden Verbinderteile 4a, 4b dieser Ausführungsform, die den inneren Enden 9a, 9b am jeweiligen Verbinderteil 4a, 4b in Längsrichtung x gegenüberliegen, sind die oben beschriebenen Aufnahme-Gegenstücke 8a, 8b angeordnet, die jeweils in den Aufnahmen 5a, 5b am jeweiligen Riemenende 1a, 1b passgenau positioniert werden können (in Fig. 5A für nur eine Seite gezeigt). Nachfolgend kann eine Nahtverbindung N ausgebildet werden, um den Riemen 1 über die beiden dazwischen eingenähten und über die Schlossverbindung V mechanisch verbundenen Verbinderteile 4a, 4b in eine endlose Form zu bringen.

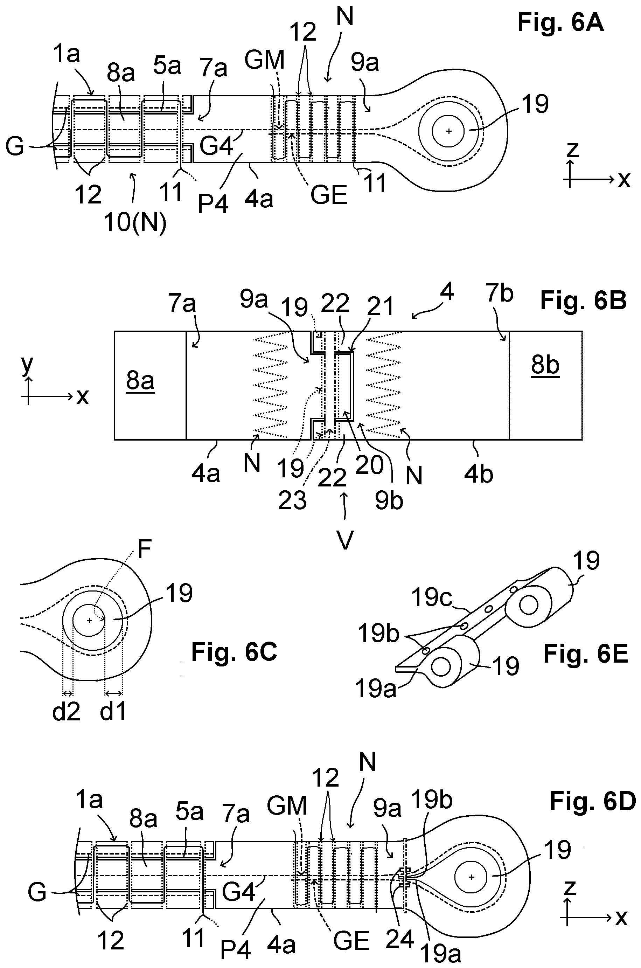

In der Ausführungsform gemäß Fig. 6A-6E ist der Riemenverbinder 4 ebenfalls zweiteilig ausgebildet, wobei das erste und das zweite Verbinderteil 4a, 4b jeweils aus einer Polymerschicht P4 mit mindestes einer darin eingebetteten Gewebelage G4 zur Verstärkung gefertigt sind. Ferner ist in jedes der Verbinderteile 4a, 4b jeweils am inneren Ende 9a, 9b eine Buchse 19 eingebettet, beispielsweise einvulkanisiert. Die Buchse 19 ist im Schnitt zylindrisch (s. Fig. 6A, 6C) oder tropfenförmig (s. Fig. 6D, 6E) ausgeführt. Die Gewebelage G4 und die Polymerlage P4 des jeweiligen Verbinderteils 4a, 4b umschlingt die eingebettete Buchse 19 und ein Endbereich GE der Gewebelage G4 ist innerhalb der Polymerschicht P4 auf einen Mittelbereich GM der Gewebelage G4 zurückgeschlagen. Ein Faden 11 durchstößt das jeweilige Verbinderteil 4a, 4b in mehreren Stichen 12 derartig, dass der Mittelbereich GM und der Endbereich GE der Gewebelage G4 zusammengehalten werden. Dadurch wird die von der Gewebelage G4 umschlungene Buchse 19 auch unter Zugbelastungen auf den endlosen Riemen 1 sicher am inneren Ende 9a, 9b gehalten.

Das innere Ende 9a des ersten Verbinderteils 4a weist wie in Fig. 6B in einer Draufsicht dargestellt einen Vorsprung 20 auf, in dem sich in lateraler Richtung y die in Fig. 6A dargestellte Buchse 19 erstreckt. Das innere Ende 9b des zweiten Verbinderteils 4b weist eine mittige Ausnehmung 21 auf, die in lateraler Richtung y von zwei Stegen 22 begrenzt wird, in denen sich jeweils eine Buchse 19 erstreckt. Auf diese Weise können die inneren Enden 9a, 9b der beiden Verbinderteile 4a, 4b derartig ineinandergesteckt werden, dass alle Buchsen 19 miteinander fluchten. Durch die miteinander fluchtenden Buchsen 19 kann ein Verbindungsstab 23 gesteckt werden, um eine mechanische Schlossverbindung V auszubilden, die ein Verschwenken der beiden Verbinderteile 4a, 4b um die Stabachse ermöglicht.

Die Buchsen 19 sind dabei aus einem gehärteten Stahl gefertigt und der Verbindungsstab 23 aus einem weicheren Material. Daher verschleißt der Verbindungsstab 23 im Betrieb schneller als die eingebetteten Buchsen 19. Allerdings ist ein Austausch des Verbindungsstabes 23 einfacher, so dass eine schnelle Reparatur gewährleistet werden kann. Ferner können die gehärteten Buchsen 19 eine ungleichmäßige Wandstärke aufweisen, wobei eine erste Wandstärke d1 im Bereich einer Kontaktfläche F der Zugkraftübertragung dicker ist als eine zweite Wandstärke d2 auf der gegenüberliegenden Seite der Buchse 19, wie beispielhaft in Fig. 6C dargestellt. Auf diese Weise sind die Buchsen 19 zusätzlich in die Richtung der höchsten Belastung verstärkt und weisen daher eine erhöhte Haltbarkeit auf.

Gemäß Fig. 6D sind bei der Buchse 19 in Tropfenform ergänzend Niederhalteplatten 24 vorgesehen, über die die Buchse 19 zusätzlich durch eine Niet- oder Schraubverbindung gesichert werden kann. Das spitz zulaufende Ende 19a der tropfenförmigen Buchse 19, das zusätzliche Öffnungen 19b aufweist, wird dabei zwischen den verschraubten oder genieteten Niederhalteplatten 24, die in die Polymerschicht P4 eingebettet sind, eingeklemmt, um eine zusätzliche Befestigung zu gewährleisten. Die tropfenförmige Buchse 19 kann aber auch ohne diese zusätzliche Befestigung am spitz zulaufende Ende 19a zum Einsatz kommen.

Ergänzend kann gemäß Fig. 6E vorgesehen sein, dass die beiden Buchsen 19, die an dem inneren Ende 9b des zweiten Verbinderteils 4b in den beiden Stegen 22 verlaufen, über ein lateral verlaufendes Übergangsstück 19c miteinander verbunden sind. Auch in diesem Übergangsstück 19c können Öffnungen 19b zur Befestigung über die Niederhalteplatten 24 vorgesehen sein.

An den äußeren Enden 7a, 7b der beiden Verbinderteile 4a, 4b dieser Ausführungsform, die den inneren Enden 9a, 9b am jeweiligen Verbinderteil 4a, 4b in Längsrichtung x gegenüberliegen, sind die oben beschriebenen Aufnahme-Gegenstücke 8a, 8b angeordnet, die jeweils in den Aufnahmen 5a, 5b am jeweiligen Riemenende 1a, 1b passgenau positioniert werden können (s. Fig. 6A, 6D). Nachfolgend kann eine Nahtverbindung N ausgebildet werden, um den Riemen 1 über die beiden dazwischen eingenähten und über die Schlossverbindung V mechanisch verbundenen Verbinderteile 4a, 4b in eine endlose Form zu bringen.

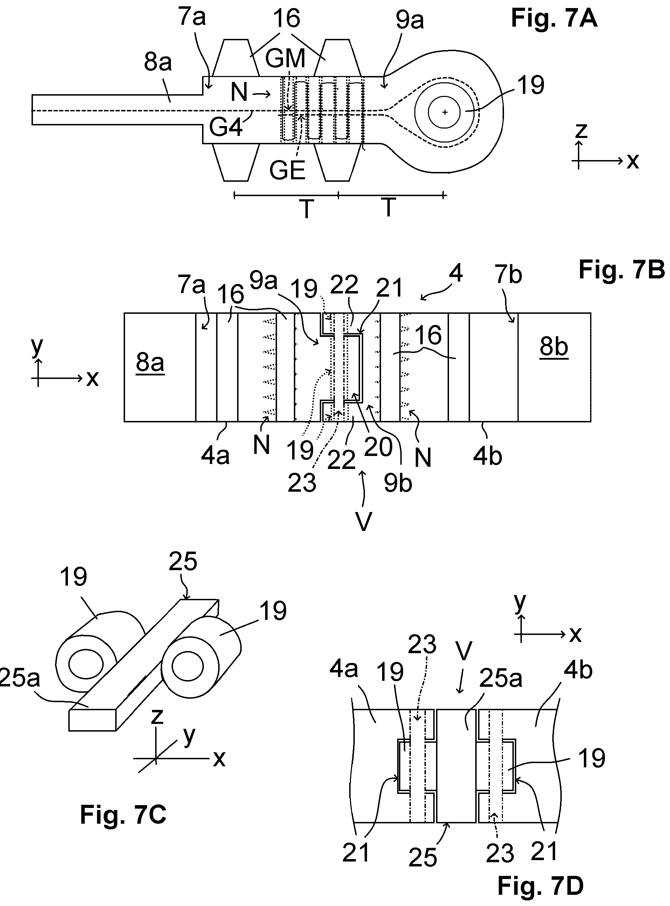

Auch in der Ausführungsform gemäß Fig. 7A-7D ist der Riemenverbinder 4 mehrteilig ausgebildet, wobei das erste und das zweite Verbinderteil 4a, 4b jeweils aus einer Polymerschicht P4 mit mindestes einer darin eingebetteten Gewebelage G4 zur Verstärkung gefertigt sind. Ferner ist in jedes der Verbinderteile 4a, 4b jeweils am inneren Ende 9a, 9b ebenfalls eine gehärtete Buchse 19 eingebettet, beispielsweise einvulkanisiert, in die ein weicherer Verbindungsstab 23 eingesteckt ist, wie in Fig. 7B in einer Draufsicht dargestellt. Die Form der Buchse 19 kann zylindrisch oder tropfenförmig sein, beispielsweise auch mit ungleichmäßiger Wandstärke wie in der vorangegangenen Ausführungsform gemäß den Fig. 6A-6E. Der Unterschied zu der vorgehend beschriebenen Ausführungsform ist, dass Riemenverbinder 4 bei einem Nockenriemen zum Einsatz kommt und daher einzelne Nocken 16 aufweist. Der Riemenverbinder 4 mit den eingebetteten Buchsen 19 ist dabei derartig ausgebildet, dass auch die Buchsen 19 bzw. der Verbindungsstab 23 in der festgelegten Teilung T zum jeweils benachbarten Nocken 16 liegen, so dass die Teilung T auch über den Riemenverbinder 4 fortgeführt wird. Die Nocken 16 können dabei nach dem Ausbilden der Nahtverbindung N zum Zusammenhalten der Gewebelagen GM, GE am jeweiligen Verbinderteil 4a, 4b aufvulkanisiert werden oder die Nocken 16 sind als lose Nocken ausgeführt, die nachträglich angefügt werden.

In Fig. 7C und 7D ist ein weiterer Unterschied, dass zwischen den beiden Verbinderteilen 4a, 4b mit eingebetteten Buchsen 19 ein Zwischenbauteil 25 eingebaut ist, das an seinen in Längsrichtung x gegenüberliegenden Enden jeweils eine Buchse 19 aufweist, die über einen Zwischensteg 25a miteinander verbunden sind. Das Zwischenbauteil 25 ist vorzugsweise einteilig aus gehärtetem Stahl gefertigt. Die inneren Enden 9a, 9b der jeweiligen Verbinderteile 4a, 4b weisen in dieser Ausführungsform beide eine mittige Ausnehmung 21 auf, die in lateraler Richtung y von zwei Stegen 22 begrenzt wird, in denen sich jeweils in lateraler Richtung y eine Buchse 19 erstreckt. Die Buchsen 19 können beispielsweise tropfenförmig und mit einem Übergangsstück wie in Fig. 6E ausgeführt sein oder aber eine andere Form aufweisen, wie zu den anderen Ausführungsformen beschrieben.

Auf diese Weise kann das Zwischenbauteil 25 mit den beiden gegenüberliegenden Buchsen 19 derartig in die Ausnehmungen 21 an den beiden inneren Enden 9a, 9b gesteckt werden, dass die Buchsen 19 an dem Zwischenbauteil 25 und dem jeweiligen Verbinderteil 4a, 4b in den Stegen 22 miteinander fluchten. Durch die miteinander fluchtenden Buchsen 19 kann dann jeweils ein Verbindungsstab 23 gesteckt werden, um eine mechanische Schlossverbindung V auszubilden. Da in dieser Ausführungsform eine schwenkbare Verbindung über zwei Verbindungsstäbe 23 ausgebildet wird, wird ein Doppelgelenk bereitgestellt.

An den äußeren Enden 7a, 7b der beiden Verbinderteile 4a, 4b dieser Ausführungsform, die den inneren Enden 9a, 9b am jeweiligen Verbinderteil 4a, 4b in Längsrichtung x gegenüberliegen, sind die oben beschriebenen Aufnahme-Gegenstücke 8a, 8b angeordnet, die jeweils in den Aufnahmen 5a, 5b am jeweiligen Riemenende 1a, 1b passgenau positioniert werden können. Nachfolgend kann eine Nahtverbindung N ausgebildet werden, um den Riemen 1 über die beiden dazwischen eingenähten und über die Schlossverbindung V mechanisch verbundenen Verbinderteile 4a, 4b in eine endlose Form zu bringen.

Die Ausführungsform gemäß den Figuren 7C und 7D mit dem Zwischenbauteil 25 kann dabei bei entsprechender Ausführung der inneren Enden 9a, 9b auch bei einem normalen Flachriemen, wie er in den Figuren 6A-6E dargestellt ist, eingesetzt werden.

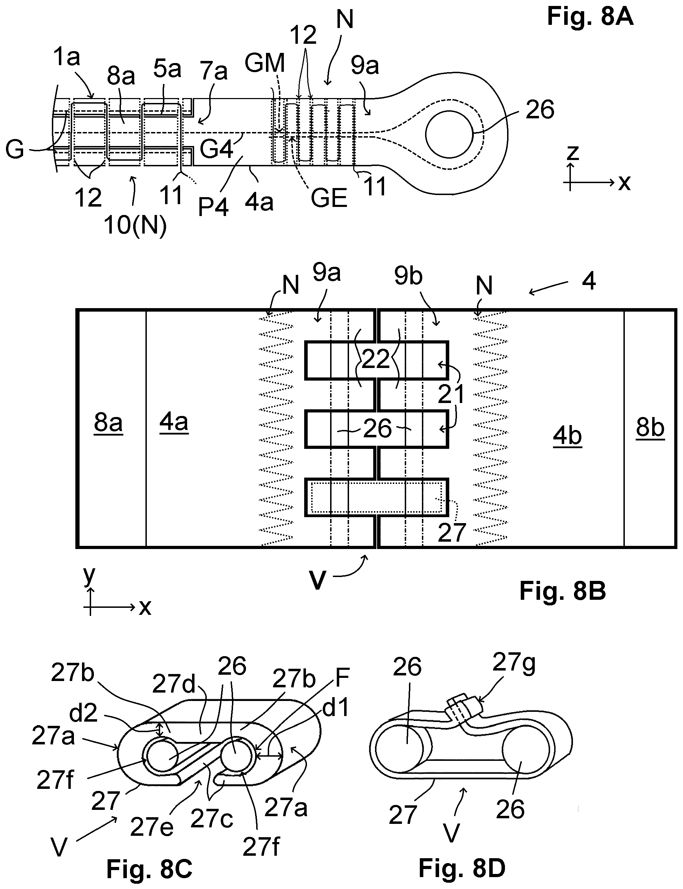

Auch in der Ausführungsform gemäß Fig. 8A-8D ist der Riemenverbinder 4 mehrteilig ausgebildet, wobei das erste und das zweite Verbinderteil 4a, 4b jeweils aus einer Polymerschicht P4 mit mindestes einer darin eingebetteten Gewebelage G4 zur Verstärkung gefertigt sind. Ferner ist in jedes der Verbinderteile 4a, 4b jeweils am inneren Ende 9a, 9b ein Rundstab 26, beispielsweise ein massiver bzw. gehärteter Rundstab 26, eingebettet, beispielsweise einvulkanisiert, wie in Fig. 8A dargestellt. Das Umlegen der eingebetteten Gewebelagen G4 um den Rundstab 26 und das Vernähen der umgeschlagenen Gewebelage G4 erfolgt dabei analog zu dem Umlegen/Vernähen der eingebetteten Gewebelage G4 um die Buchse 19 gemäß den vorangehenden Ausführungsformen, um den Rundstab 26 unter Zugbelastungen auf den endlosen Riemen 1 sicher am jeweiligen Verbinderteil 4a, 4b zu halten.

Die beiden inneren Enden 9a, 9b der jeweiligen Verbinderteile 4a, 4b weisen jeweils ein oder mehrere Ausnehmung(en) 21 auf, wie in Fig. 8B dargestellt, die in lateraler Richtung y von Stegen 22 begrenzt wird oder werden. Der Rundstab 26 erstreckt sich dabei in lateraler Richtung y durch die einzelnen Stege 22, in die er eingebettet ist, und überbrückt dabei freiliegend die Ausnehmung(en) 21. Für eine Verbindung der beiden inneren Enden 9a, 9b gehen die Ausnehmungen 21 beider Verbinderteile 4a, 4b ineinander über bzw. liegen die Stege 22 beider Verbinderteile 4a, 4b stirnseitig aneinander. Die beiden Verbinderteile 4a, 4b liegen sich also spiegelbildlich gegenüber.

Um eine Schlossverbindung V zwischen beiden auszubilden, ist ein Fixierbauteil 27 vorgesehen, das in zwei unterschiedlichen Ausführungen in den Figuren 8C und 8D dargestellt ist. Das Fixierbauteil 27 kann in jeglichen Ausführungen die beiden Rundstäbe 26 umgreifen, die innerhalb der in longitudinaler Richtung x ineinander übergehenden Ausnehmungen 21 beider Verbinderteile 4a, 4b parallel zueinander freiliegen. Dadurch werden die beiden Rundstäbe 26 und auch die beiden Verbinderteile 4a, 4b zusammengehalten. Ein solches Fixierbauteil 27 kann für jede der durch die Stege 22 voneinander getrennten ineinander übergehenden Ausnehmungen 21 vorgesehen sein, so dass die beiden Rundstäbe 26 über die gesamte Breite des Riemens 1 gleichmäßig zusammengehalten werden. Es kann auch ein einzelnes kombiniertes Fixierbauteil 27 vorgesehen sein, das in den mehreren Ausnehmungen 21 gleichzeitig alle freiliegenden Rundstäbe 26 umgreifen kann.

In der Ausführungsform gemäß Fig. 8C weist das Fixierbauteil 27 zwei C-förmige Endbereiche 27a jeweils mit einen oberen Schenkel 27b und einem unteren Schenkel 27c auf, wobei die beiden C-förmigen Endbereiche 27a spiegelsymmetrisch zueinander geöffnet sind. Die oberen Schenkel 27b der beiden C-förmigen Endbereiche 27a sind über einen Mittelsteg 27d miteinander verbunden, während die unteren Schenkel 27c voneinander getrennt bleiben, so dass sich ein unterer Zwischenraum 27e zwischen beiden ausbildet. Durch den unteren Zwischenraum 27e können die beiden in den Ausnehmungen 21 freiliegenden Rundstäbe 26 jeweils in einer durch die jeweiligen Schenkel 27b, 27c eines C-förmigen Endbereiches 27a gebildeten Kavität 27f positioniert werden, so dass dieses Fixierbauteil 27 beide Rundstäbe 26 umgreift.

Sind die beiden Verbinderteile 4a, 4b im endlosen Zustand des Riemens 1 gespannt, so sorgen die spiegelsymmetrisch zueinander angeordneten C-förmigen Endbereiche 27a dafür, dass die Rundstäbe 26 nicht über den Zwischenraum 27e aus der Kavität 27f herausrutschen können und dadurch dauerhaft eingeklemmt bzw. zusammengehalten werden. Auf diese Weise wird eine dauerhaltbare mechanische Schlossverbindung V ausgebildet.

Die C-förmigen Endbereiche 27a können ferner eine ungleichmäßige Wandstärke aufweisen, wobei eine erste Wandstärke d1 im Bereich der Kontaktfläche F der Zugkraftübertragung dicker ist als eine zweite Wandstärke d2 der weniger belasteten Schenkel 27b, 27c, wie beispielhaft in Fig. 8C dargestellt. Auf diese Weise ist das derartig ausgeführte Fixierbauteil 27 zusätzlich in die Richtung der höchsten Belastung verstärkt und weist daher eine erhöhte Haltbarkeit auf.

In der Ausführungsform gemäß Fig. 8D ist das Fixierbauteil 27 band-oder seilartig ausgeführt und wird um die beiden Rundstäbe 26, die innerhalb der ineinander übergehenden Ausnehmungen 21 beider Verbinderteile 4a, 4b parallel zueinander freiliegen, umgelegt und dann verschlossen. Das band- oder seilartige Fixierbauteil 27 ist in diesem Fall vorzugsweise aus Stahl gefertigt und wird an einer Verbindungsstelle 27g kraftschlüssig und/oder formschlüssig in eine geschlossene Form gebracht, beispielsweise durch Krimpen oder Schrauben oder Verrasten, beispielsweise nach Art eines Kabelbinders. Auf diese Weise werden die beiden Rundstäbe 26 ebenfalls zusammengehalten und eine dauerhaltbare mechanische Schlossverbindung V ausgebildet.

An den äußeren Enden 7a, 7b der beiden Verbinderteile 4a, 4b dieser Ausführungsform, die den inneren Enden 9a, 9b am jeweiligen Verbinderteil 4a, 4b in Längsrichtung x gegenüberliegen, sind die oben beschriebenen Aufnahme-Gegenstücke 8a, 8b angeordnet, die jeweils in den Aufnahmen 5a, 5b am jeweiligen Riemenende 1a, 1b passgenau positioniert werden können. Nachfolgend kann eine Nahtverbindung N ausgebildet werden, um den Riemen 1 über die beiden dazwischen eingenähten und über die Schlossverbindung V mechanisch verbundenen Verbinderteile 4a, 4b in eine endlose Form zu bringen.

### Bezugszeichenliste

- 1: Riemen
- 1a: erstes Riemenende
- 1b: zweites Riemenende
- 1c: neutrale Faser des Riemens 1
- 2: Antriebsrolle
- 3: Umlenkrolle
- 4: Riemenverbinder
- 4a: erstes Verbinderteil
- 4b: zweites Verbinderteil
- 4c: neutrale Faser der Riemenverbinder
- 5a: erste Aufnahme
- 5b: zweite Aufnahme
- 6a: Stirnseite des ersten Riemenendes 1a
- 6b: Stirnseite des zweiten Riemenendes 1b
- 7a: erstes äußeres Ende des Riemenverbinders 4
- 7b: zweites äußeres Ende des Riemenverbinders 4
- 8a: erstes Aufnahme-Gegenstück
- 8b: zweites Aufnahme-Gegenstück
- 9a: inneres Ende des ersten Verbinderteils 4a
- 9b: inneres Ende des zweiten Verbinderteils 4b
- 10: Nahtbereich
- 11: Faden
- 12: Stich
- 15: Formteil
- 15a: Oberseite des Formteils 15
- 15b: Unterseite des Formteils 15
- 16: Nocken
- 17: Stahlblech
- 17a: Perforierung
- 17b: Verbindungslöcher
- 18: Befestigungsmittel
- 19: Buchse
- 19a: spitz zulaufendes Ende der Buchse 19
- 19b: Öffnungen
- 19c: Übergangsstück
- 20: Vorsprung
- 21: Ausnehmung
- 22: Stege der Ausnehmung 21
- 23: Verbindungsstab
- 24: Niederhalteplatte
- 25: Zwischenbauteil
- 25a: Zwischensteg des Zwischenbauteils 25
- 26: Rundstab
- 27: Fixierbauteil
- 27a: Endbereiche des Fixierbauteils
- 27b: oberer Schenkel
- 27c: unterer Schenkel
- 27d: Mittelsteg
- 27e: unterer Zwischenraum
- 27f: Kavität
- 27g: Verbindungsstelle

- d1: erste Wandstärke
- d2: zweite Wandstärke
- F: Kontaktfläche der Zugkraftübertragung
- G: Gewebelage des Riemens 1
- G4: Gewebelage des Riemenverbinders 4
- GE: Endbereich der Gewebelage G4
- GM: Mittelbereich der Gewebelage G4
- K: Kerbe
- N: Nahtverbindung
- P: Polymerschicht des Riemens 1
- P4: Polymerschicht des Riemenverbinders 4
- S: Stufe
- T: Teilung
- V: Schlossverbindung
- x: Längsrichtung
- y: laterale Richtung
- z: vertikale Richtung

## Patentansprüche

1. Riemen (1) als endloses Zugmittel für Förderbänder, insbesondere Förderbänder landwirtschaftlicher Maschinen, mit mindestens einer Gewebelage (G), die zumindest bereichsweise in eine Polymerlage (P) eingebettet ist, wobei der Riemen (1) ein erstes Riemenende (1a) und ein zweites Riemenende (1b) aufweist, die über einen Riemenverbinder (4) miteinander verbunden sind zum Ausbilden eines endlosen Riemens (1), **dadurch gekennzeichnet, dass** der Riemenverbinder (4) ein erstes äußeres Ende (7a) und ein damit verbundenes oder verbindbares zweites äußeres Ende (7b) aufweist, die sich in Längsrichtung (x) an dem Riemenverbinder (4) gegenüberliegen, wobei das erste äußere Ende (7a) des Riemenverbinders (4) mit dem ersten Riemenende (1a) und das zweite äußere Ende (7b) des Riemenverbinders (4) mit dem zweiten Riemenende (1b) verbunden ist,
und **dass** zwischen dem jeweiligen äußeren Ende (7a, 7b) des Riemenverbinders (4) und dem jeweiligen Riemenende (1a, 1b) des Riemens (1) jeweils eine Nahtverbindung (N) ausgebildet ist, bei der jeweils ein Faden (11) sowohl das jeweilige äußere Ende (7a, 7b) als auch das jeweilige Riemenende (1a, 1b) in mehreren Stichen (12) durchstößt, und
dass der Riemenverbinder (4) eine Polymerschicht (P4) aufweist, in die mindestens eine Gewebelage (G4) eingebettet ist.

2. Riemen (1) nach Anspruch 1 oder 2, **dadurch gekennzeichnet, dass** an jedem Riemenende (1a, 1b) eine Aufnahme (5a, 5b) angeordnet ist, beispielsweise in Form einer Kerbe (K) oder einer Stufe (S), und an jedem äußeren Ende (7a, 7b) des Riemenverbinders (4) ein Aufnahme-Gegenstück (8a, 8b) angeordnet ist, das komplementär zu der Aufnahme (5a, 5b) ausgeführt ist,
wobei das Aufnahme-Gegenstück (8a, 8b) an dem jeweiligen äußeren Ende (7a, 7b) passgenau auf oder in der Aufnahme (5a, 5b) an dem jeweiligen Riemenende (1a, 1b) so positioniert werden kann, dass die Aufnahme (5a, 5b) und das Aufnahme-Gegenstück (8a, 8b) in vertikaler Richtung (z) übereinanderliegen, und der Faden (11) das jeweilige Riemenende (1a, 1b) zumindest im Bereich der Aufnahme (5a, 5b) sowie das jeweilige äußeren Ende (7a, 7b) zumindest im Bereich des Aufnahme-Gegenstückes (8a, 8b) in vertikaler Richtung (z) durchstößt.

3. Riemen (1) nach Anspruch 2, **dadurch gekennzeichnet, dass** sich die mindestens eine Gewebelage (G) an dem Riemenende (1a, 1b) zumindest bis in den Bereich der Aufnahme (5a, 5b) erstreckt, so dass der Faden (11) auch die Gewebelage (G) am jeweiligen Riemenende (1a, 1b) durchstößt.

4. Riemen (1) nach einem der vorhergehenden Ansprüche, **dadurch gekennzeichnet, dass** der Riemenverbinder (4) einteilig oder mehrteilig ausgeführt ist.

5. Riemen (1) nach Anspruch 4, **dadurch gekennzeichnet, dass** der Riemenverbinder (4) in der mehrteiligen Ausführung
- ein erstes Verbinderteil (4a) mit dem ersten äußeren Ende (7a) und mit einem ersten inneren Ende (9a) sowie
- ein zweites Verbinderteil (4b) mit dem zweiten äußeren Ende (7b) und mit einem zweiten inneren Ende (9b)
aufweist, wobei zwischen den inneren Enden (9a, 9b) der beiden Verbinderteile (4a, 4b) eine mechanische Schlossverbindung (V) ausgebildet ist.

6. Riemen (1) nach Anspruch 5, **dadurch gekennzeichnet, dass** an den inneren Enden (9a, 9b) der Verbinderteile (4a, 4b) des Riemenverbinders (4) jeweils ein Stahlblech (17) mit ein oder mehreren Verbindungslöchern (17b), die das jeweilige Stahlblech (17) in vertikaler Richtung (y) durchsetzen, angeordnet ist, wobei das jeweilige Stahlbleich (17) zumindest teilweise in die Polymerschicht (P4) des Riemenverbinders (4) eingebettet ist,
wobei die inneren Enden (9a, 9b) der beiden Verbinderteile (4a, 4b) derartig übereinandergelegt sind, dass die Verbindungslöcher (17b) der daran angeordneten Stahlbleche (17) fluchtend übereinanderliegen, und
wobei mindestens ein Befestigungsmittel (18) durch die miteinander fluchtenden Verbindungslöcher (17b) gesteckt ist, um die Schlossverbindung (V) auszubilden.

7. Riemen (1) nach Anspruch 6, **dadurch gekennzeichnet, dass** das jeweilige Stahlblech (17) an das jeweilige Verbinderteil (4a, 4b) angenäht ist, wobei das jeweilige Stahlblech (17) dazu vorzugsweise eine Perforierung (17a) aufweist.

8. Riemen (1) nach Anspruch 5, **dadurch gekennzeichnet, dass** an den inneren Enden (9a, 9b) der Verbinderteile (4a, 4b) des Riemenverbinders (4) jeweils mindestens eine in lateraler Richtung (y) ausgedehnte Buchse (19) angeordnet ist, wobei die jeweilige Buchse (19) in die Polymerschicht (P4) des Riemenverbinders (4) eingebettet ist,
wobei die inneren Enden (9a, 9b) der beiden Verbinderteile (4a, 4b) derartig ineinander eingreifen, beispielsweise fingerartig ineinander eingreifen, dass die Buchsen (19) an den beiden Verbinderteilen (4a, 4b) miteinander fluchten,
wobei in die miteinander fluchtenden Buchsen (19) in lateraler Richtung (y) ein Verbindungsstab (23) passgenau eingesteckt ist, um die Schlossverbindung (V) auszubilden.

9. Riemen (1) nach Anspruch 8, **dadurch gekennzeichnet, dass** die mindestens eine Gewebelage (G4) des jeweiligen Verbinderteils (4a, 4b) die eingebettete Buchse (19) umschlingt, wobei dazu ein Endbereich (GE) der Gewebelage (G4) innerhalb der Polymerschicht (P4) auf einen Mittelbereich (GM) der Gewebelage (G4) zurückgeschlagen ist, wobei der Mittelbereich (GM) und der Endbereich (GE) der Gewebelage (G4) miteinander vernäht sind.

10. Riemen (1) nach Anspruch 9, **dadurch gekennzeichnet, dass** die Buchsen (19) eine ungleichmäßige Wandstärke aufweisen, wobei eine erste Wandstärke (d1) der Buchse (19) im Bereich einer Kontaktfläche (F) der Zugkraftübertragung, gegen die der Verbindungsstab (23) unter einer Zugbelastung gezogen wird, dicker ist als eine zweite Wandstärke (d2) der Buchse (19), die die Buchse (19) auf der gegenüberliegenden Seite aufweist.

11. Riemen nach Anspruch 8 oder 9, **dadurch gekennzeichnet, dass** die Buchsen (19) tropfenförmig ausgeführt sind, wobei ein spitz zulaufendes Ende (19a) der jeweiligen Buchse (19) zwischen zwei in die Polymerschicht (P4) eingebetteten Niederhalteplatten (24) eingeklemmt ist.

12. Riemen nach Anspruch 5, **dadurch gekennzeichnet, dass** an den inneren Enden (9a, 9b) der Verbinderteile (4a, 4b) des Riemenverbinders (4) jeweils mindestens ein in lateraler Richtung (y) ausgedehnter Rundstab (26) angeordnet ist,
wobei der jeweilige Rundstab (26) innerhalb von Stegen (22) an den inneren Enden (9a, 9b) in die Polymerschicht (P4) des Riemenverbinders (4) eingebettet ist und in lateraler Richtung (y) zwischen den Stegen (22) eine Ausnehmung (21) verläuft, innerhalb derer der jeweilige Rundstab (26) freiliegt,
wobei die inneren Enden (9a, 9b) der beiden Verbinderteile (4a, 4b) im Bereich der Stege (22) aneinander liegen, insbesondere stirnseitig aneinander liegen, und mindestens ein Fixierbauteil (27) die in den Ausnehmungen (12) freiliegenden Rundstäbe (26) an den beiden Verbinderteilen (4a, 4b) umgreift, um diese in Längsrichtung (x) zusammenzuhalten und die Schlossverbindung (V) auszubilden.

13. Riemen (1) nach Anspruch 12, **dadurch gekennzeichnet, dass** das Fixierbauteil (27) zwei C-förmige Endbereiche (27a) jeweils mit einem oberen Schenkel (27b) und einem unteren Schenkel (27c) aufweist, wobei die beiden C-förmigen Endbereiche (27a) spiegelsymmetrisch zueinander geöffnet sind,
wobei die oberen Schenkel (27b) der beiden C-förmigen Endbereiche (27a) über einen Mittelsteg (27d) miteinander verbunden sind, während die unteren Schenkel (27c) voneinander getrennt sind, so dass sich ein unterer Zwischenraum (27e) zwischen beiden ausbildet, wobei die beiden in den Ausnehmungen (21) freiliegenden Rundstäbe (26) jeweils in einer durch die Schenkel (27b, 27c) des jeweiligen C-förmigen Endbereiches (27a) gebildeten Kavität (27f) positioniert sind.

14. Riemen (1) nach Anspruch 12 oder 13, **dadurch gekennzeichnet, dass** das Fixierbauteil (27) band- oder seilartig ausgeführt ist und um die beiden in den Ausnehmungen (21) freiliegenden Rundstäbe (26), umgelegt ist, wobei das band- oder seilartige ausgeführte Fixierbauteil (27) an einer Verbindungsstelle (27g) kraftschlüssig und/oder formschlüssig verschlossen ist, um es in eine geschlossene Form zu bringen und die Rundstäbe (26) in Längsrichtung (x) zusammenzuhalten.

15. Riemen (1) nach einem der vorhergehenden Ansprüche, **dadurch gekennzeichnet, dass** an dem Riemenverbinder (4) und/oder an dem Riemen (1) unterseitig und/oder oberseitig Nocken (16) angeordnet sind, wobei eine Teilung (T) der Nocken (16) über den Riemenverbinder (4) beibehalten ist.

## Claims

1. Belt (1) as endless traction means for conveyor belts, in particular conveyor belts of agricultural machines, having at least one fabric layer (G), which is embedded at least regionally in a polymer layer (P), wherein the belt (1) has a first belt end (1a) and a second belt end (1b), which are connected to one another via a belt connector (4) for forming an endless belt (1), **characterized in that** the belt connector (4) has a first exterior end (7a) and a second exterior end (7b) connected or connectable thereto, which lie opposite one another in the longitudinal direction (x) on the belt connector (4), wherein the first exterior end (7a) of the belt connector (4) is connected to the first belt end (1a) and the second exterior end (7b) of the belt connector (4) is connected to the second belt end (1b),
and **in that**
between the respective exterior end (7a, 7b) of the belt connector (4) and the respective belt end (1a, 1b) of the belt (1), respectively, a seam connection (N) is formed, in which respectively a thread (11) pierces both the respective exterior end (7a, 7b) and the respective belt end (1a, 1b) in a plurality of stitches (12), and
**in that** the belt connector (4) has a polymer layer (P4), into which at least one fabric layer (G4) is embedded.

2. Belt (1) according to claim 1 or 2, **characterized in that** a receptacle (5a, 5b) is arranged at each belt end (1a, 1b), for example in the form of a notch (K) or a step (S), and at each exterior end (7a, 7b) of the belt connector (4) a receptacle counterpart (8a, 8b) is arranged, which is executed complementarily to the receptacle (5a, 5b),
wherein the receptacle counterpart (8a, 8b) at the respective exterior end (7a, 7b) can be positioned with a precise fit on or in the receptacle (5a, 5b) at the respective belt end (1a, 1b) in such a way that the receptacle (5a, 5b) and the receptacle counterpart (8a, 8b) lie one above the other in the vertical direction (z), and the thread (11) pierces the respective belt end (1a, 1b) at least in the region of the receptacle (5a, 5b) as well as the respective exterior end (7a, 7b) at least in the region of the receptacle counterpart (8a, 8b) in the vertical direction (z).

3. Belt (1) according to claim 2, **characterized in that** the at least one fabric layer (G) at the belt end (1a, 1b) extends at least into the region of the receptacle (5a, 5b), so that the thread (11) also pierces the fabric layer (G) at the respective belt end (1a, 1b).

4. Belt (1) according to one of the preceding claims, **characterized in that** the belt connector (4) is executed in one piece or in multiple parts.

5. Belt (1) according to claim 4, **characterized in that** the belt connector (4) in the multi-part embodiment has
- a first connector element (4a) with the first exterior end (7a) and with a first interior end (9a) as well as
- a second connector element (4b) with the second exterior end (7b) and with a second interior end (9b)
wherein a mechanical lock connection (V) is formed between the interior ends (9a, 9b) of the two connector elements (4a, 4b).

6. Belt (1) according to claim 5, **characterized in that** at the interior ends (9a, 9b) of the connector elements (4a, 4b) of the belt connector (4), respectively, a steel plate (17) with one or more connecting holes (17b), which pass through the respective steel plate (17) in the vertical direction (y), is arranged, wherein the respective steel plate (17) is at least partially embedded in the polymer layer (P4) of the belt connector (4),
wherein the interior ends (9a, 9b) of the two connector elements (4a, 4b) are laid one above the other in such a way that the connecting holes (17b) of the steel plates (17) arranged thereon lie aligned one above the other, and
wherein at least one fastening element (18) is inserted through the mutually aligned connecting holes (17b) in order to form the lock connection (V).

7. Belt (1) according to claim 6, **characterized in that** the respective steel plate (17) is sewn to the respective connector element (4a, 4b), wherein the respective steel plate (17) for this purpose preferably has a perforation (17a).

8. Belt (1) according to claim 5, **characterized in that** at the interior ends (9a, 9b) of the connector elements (4a, 4b) of the belt connector (4), respectively, at least one bushing (19) extended in the lateral direction (y) is arranged, wherein the respective bushing (19) is embedded in the polymer layer (P4) of the belt connector (4),
wherein the interior ends (9a, 9b) of the two connector elements (4a, 4b) engage into one another in such a way, for example engage into one another in a finger-like manner, that the bushings (19) on the two connector elements (4a, 4b) align with one another,
wherein a connecting rod (23) is inserted with a precise fit into the mutually aligned bushings (19) in the lateral direction (y) in order to form the lock connection (V).

9. Belt (1) according to claim 8, **characterized in that** the at least one fabric layer (G4) of the respective connector element (4a, 4b) wraps around the embedded bushing (19), wherein for this purpose an end region (GE) of the fabric layer (G4) within the polymer layer (P4) is folded back onto a middle region (GM) of the fabric layer (G4), wherein the middle region (GM) and the end region (GE) of the fabric layer (G4) are sewn to one another.

10. Belt (1) according to claim 9, **characterized in that** the bushings (19) have a non-uniform wall thickness, wherein a first wall thickness (d1) of the bushing (19) in the region of a contact surface (F) of the transmission of tensile load, against which the connecting rod (23) is pulled under a tensile load, is thicker than a second wall thickness (d2) of the bushing (19), which the bushing (19) has on the opposite side.

11. Belt according to claim 8 or 9, **characterized in that** the bushings (19) are executed in a drop shape, wherein a tapered end (19a) of the respective bushing (19) is clamped between two hold-down plates (24) embedded in the polymer layer (P4).

12. Belt according to claim 5, **characterized in that** at the interior ends (9a, 9b) of the connector elements (4a, 4b) of the belt connector (4), respectively, at least one round bar (26) extended in the lateral direction (y) is arranged,
wherein the respective round bar (26) is embedded within bridges (22) at the interior ends (9a, 9b) into the polymer layer (P4) of the belt connector (4) and a recess (21) extends in the lateral direction (y) between the bridges (22), within which the respective round bar (26) lies exposed,
wherein the interior ends (9a, 9b) of the two connector elements (4a, 4b) lie against one another in the region of the bridges (22), in particular lie against one another end-face-side, and at least one fixing element (27) engages around the round bars (26) exposed in the recesses (12) on the two connector elements (4a, 4b) in order to hold them together in the longitudinal direction (x) and to form the lock connection (V).

13. Belt (1) according to claim 12, **characterized in that** the fixing element (27) has two C-shaped end regions (27a) each with an upper leg (27b) and a lower leg (27c), wherein the two C-shaped end regions (27a) are opened mirror-symmetrically to one another,
wherein the upper legs (27b) of the two C-shaped end regions (27a) are connected to one another via a middle bridge (27d), while the lower legs (27c) are separated from one another, so that a lower gap (27e) is formed between the two, wherein the two round bars (26) exposed in the recesses (21) are each positioned in a cavity (27f) formed by the legs (27b, 27c) of the respective C-shaped end region (27a).

14. Belt (1) according to claim 12 or 13, **characterized in that** the fixing element (27) is executed in a band-like or cable-like manner and is folded around the two round bars (26) exposed in the recesses (21), wherein the fixing element (27) executed in a band-like or cable-like manner is closed at a connection point (27g) in a force-fitting and/or form-fitting manner in order to bring it into a closed form and to hold the round bars (26) together in the longitudinal direction (x).

15. Belt (1) according to one of the preceding claims, **characterized in that** cams (16) are arranged on the belt connector (4) and/or on the belt (1) on the underside and/or on the upper side, wherein a spacing (T) of the cams (16) is maintained over the belt connector (4).

## Revendications

1. Courroie (1) moyen de traction sans fin pour transporteurs, en particulier pour transporteurs de machines agricoles, avec au moins une couche de tissu (G) incorporée au moins par zones dans une couche de polymères (P), la courroie (1) comportant une première extrémité de courroie (1a) et une seconde extrémité de courroie (1b) qui sont liées l'une à l'autre via une agrafe pour courroie (4) pour former une courroie sans fin (1), **caractérisée en ce que** l'agrafe pour courroie (4) comporte une première extrémité externe (7a) et une seconde extrémité externe (7b) qui lui est attachée ou attachable, qui se font face longitudinalement (x) au niveau de l'agrafe pour courroie (4), la première extrémité externe (7a) de l'agrafe pour courroie (4) étant reliée à la première extrémité de courroie (1a) et la seconde extrémité externe (7b) de l'agrafe pour courroie (4) étant reliée à la seconde extrémité de courroie (1b),
et **en ce que**
une couture (N) est constituée respectivement entre l'extrémité externe respective (7a, 7b) de l'agrafe pour courroie (4) et l'extrémité respective de courroie (1a, 1b) de la courroie (1), où respectivement un fil (11) traverse l'extrémité externe respective (7a, 7b) ainsi que l'extrémité de courroie respective (1a, 1b) en plusieurs piqûres (12),
et **en ce que**
l'agrafe pour courroie (4) comporte une couche polymère (P4) dans laquelle est incorporée au moins une couche de tissu (G4).

2. Courroie (1) selon la revendication 1 ou 2, **caractérisée en ce qu'**à chaque extrémité de courroie (1a, 1b) est disposée une prise (5a, 5b) sous la forme d'une encoche (K) ou d'un cran (S), et à chaque extrémité externe (7a, 7b) de l'agrafe pour courroie (4) est disposée une contre-prise (8a, 8b) réalisée de façon complémentaire à la prise (5a, 5b),
dans laquelle la contre-prise (8a, 8b) à l'extrémité externe respective (7a, 7b) peut être positionnée sur mesure sur ou dans la prise (5a, 5b) au niveau de l'extrémité de courroie respective (1a, 1b), de sorte que la prise (5a, 5b) et la contre-prise (8a, 8b) se superposent verticalement (z) et le fil (11) traverse l'extrémité de courroie respective (1a, 1b) au moins dans la zone de la prise (5a, 5b) ainsi que l'extrémité externe respective (7a, 7b) au moins dans la zone de la contre-prise (8a, 8b) verticalement (z).

3. Courroie (1) selon la revendication 2, **caractérisée en ce que** l'au moins une couche de tissu (G) s'étend à l'extrémité de courroie (1a, 1b) au moins jusque dans la zone de la prise (5a, 5b), de sorte que le fil (11) traverse aussi la couche de tissu (G) à l'extrémité correspondante de la courroie (1a, 1b).

4. Courroie (1) selon l'une des revendications précédentes, **caractérisée en ce que** l'agrafe de courroie (4) est réalisée d'une pièce ou en plusieurs pièces.

5. Courroie (1) selon la revendication 4, **caractérisée en ce que** l'agrafe de courroie (4) dans la réalisation en plusieurs pièces comporte
- une première pièce d'agrafe (4a) avec la première extrémité externe (7a) et avec une première extrémité interne (9a), ainsi que
- une seconde pièce d'agrafe (4b) avec la seconde extrémité externe (7b) et avec une seconde extrémité interne (9b), où une fermeture de verrouillage mécanique (V) est conçue entre les deux extrémités internes (9a, 9b) des deux pièces d'agrafe (4a, 4b).

6. Courroie (1) selon la revendication 5, **caractérisée en ce qu'**aux extrémités internes (9a, 9b) des pièces d'agrafe (4a, 4b) de l'agrafe de courroie (4), respectivement une tôle d'acier (17) est disposée avec au moins un orifice de liaison (17b) qui traverse la tôle d'acier correspondante (17) verticalement (y), la tôle d'acier respective (17) étant incorporée au moins partiellement dans la couche polymère (P4) de l'agrafe de courroie (4),
où les extrémités internes (9a, 9b) des deux pièces d'agrafe (4a, 4b) sont superposées, de sorte que les orifices de liaison (17b) des tôles d'acier (17) qui y sont disposées sont superposées de manière coïncidente, et
où au moins une fixation (18) est fichée à travers les orifices de liaison (17b) en coïncidence l'un avec l'autre pour former la fermeture de verrouillage (V).

7. Courroie (1) selon la revendication 6, **caractérisée en ce que** la tôle d'acier respective (17) est cousue sur la pièce d'agrafe respective (4a, 4b), la tôle d'acier respective (17) comportant pour cela préférentiellement une perforation (17a).

8. Courroie (1) selon la revendication 5, **caractérisée en ce qu'**aux extrémités internes (9a, 9b) des pièces d'agrafe (4a, 4b) de l'agrafe de courroie (4) est disposée respectivement au moins une douille (19) étirée latéralement (y), la douille respective (19) étant incorporée dans la couche polymère (P4) de l'agrafe de courroie (4),
où les extrémités internes (9a, 9b) des deux pièces d'agrafe (4a, 4b) s'engrènent, par exemple s'engrènent comme des doigts, de sorte que les douilles (19) coïncident entre elles au niveau des deux pièces d'agrafe (4a, 4b),
où dans les douilles en coïncidence (19), une tige de liaison (23) est fichée sur mesure latéralement (y) pour former la fermeture de verrouillage (V).

9. Courroie (1) selon la revendication 8, **caractérisée en ce que** l'au moins une couche de tissu (G4) de la pièce d'agrafe respective (4a, 4b) entoure la douille incorporée (19), une zone extrémale (GE) de la couche de tissu (G4) étant repliée pour ce faire à l'intérieur de la couche polymère (P4) sur une zone médiane (GM) de la couche de tissu (G4), la zone médiane (GM) et la zone extrémale (GE) de la couche de tissu (G4) étant cousues ensemble.

10. Courroie (1) selon la revendication 9, **caractérisée en ce que** les douilles (19) comportent une épaisseur de paroi irrégulière, une première épaisseur de paroi (d1) de la douille (19) dans la zone d'une surface de contact (F) de la transmission de force, contre laquelle la tige de liaison (23) est tirée sous l'action d'une force de traction, est plus épaisse qu'une seconde épaisseur de paroi (d2) de la douille (19) que la douille (19) comporte du côté opposé.

11. Courroie selon la revendication 8 ou 9, **caractérisée en ce que** les douilles (19) sont réalisées en forme de gouttes, une extrémité à bout pointu (19a) de la douille respective (19) étant coincée entre deux plaques de rétention (24) incorpées dans la couche polymère (P4).

12. Courroie selon la revendication 5, **caractérisée en ce qu'**aux extrémités internes (9a, 9b) des pièces d'agrafe (4a, 4b) de l'agrafe de courroie (4) est disposée respectivement au moins une barre ronde (26) étirée latéralement (y), où la barre ronde respective (26) est incorporée à l'intérieur de barrettes (22) aux extrémités internes (9a, 9b) dans la couche polymère (P4) de l'agrafe de courroie (4) et un évidement (21) court latéralement (y) entre les barrettes (22), à l'intérieur duquel la barre ronde respective (26) est exposée,
où les extrémités internes (9a, 9b) des deux pièces d'agrafe (4a, 4b) sont disposées l'une contre l'autre dans la zone des barrettes (22), en particulier l'une contre l'autre frontalement, et au moins une pièce de fixation (27) enserre les barres rondes (26) exposées dans les évidements (21) au niveau des deux pièces d'agrafe (4a, 4b) pour les retenir ensemble longitudinalement (x) et pour former la fermeture de verrouillage (V).

13. Courroie (1) selon la revendication 12, **caractérisée en ce que** la pièce de fixation (27) comporte deux zones extrémales en forme de C (27a) respectivement avec une patte supérieure (27b) et une patte inférieure (27c), les deux zones extrémales en forme de C (27a) étant ouvertes symétriquement en miroir l'une de l'autre,
où la patte supérieure (27b) des deux zones extrémales en forme de C (27a) sont liées ensemble par un pont central (27d) tandis que les pattes inférieures (27c) sont séparées l'une de l'autre, de façon à former un espace intermédiaire inférieur (27e) entre les deux, les deux barres rondes (26) exposées dans les évidements (21) étant positionnées respectivement dans une cavité (27f) formée par les pattes (27b, 27c) de la zone extrémale respective en forme de C (27a).

14. Courroie (1) selon la revendication 12 ou 13, **caractérisée en ce que** la pièce de fixation (27) est réalisée sous forme de bande ou de câble et enroulée autour des deux barres rondes (26) exposées dans les évidements (21), la pièce de fixation (27) réalisée sous forme de bande ou de câble étant verrouillée par complémentarité de forces et/ou de formes en un site de liaison (27g) pour l'amener dans une forme fermée et retenir les barres rondes (26) longitudinalement (x).

15. Courroie (1) selon l'une des revendications précédentes, **caractérisée en ce qu'**une came (16) est disposée au niveau de l'agrafe de courroie (4) et/ou au niveau de la courroie (1) par en-dessous et/ou par au dessus, une division (T) de la came (16) étant maintenue au dessus de l'agrafe de courroie (4).
